# DEMANDE DE BREVET EUROPEEN

(11) **EP 2 336 936 A1**
(43) Date de publication de la demande: **22.06.2011**
(21) Numéro de dépôt: 09306280.0
(22) Date de dépôt: 18.12.2009
(51) Int. Cl.: G06F 21/00, H04W 12/08, H04L 29/06

(54) **Système de gestion de midlets mis en oeuvre dans un réseau de radiotéléphonie mobile et procédé correspondant**

(71) Demandeur: Gemalto SA, 92190 Meudon (FR)
(72) Inventeur: Poujol, Stéphane, 13600 La Ciotat (FR); Gattone, Alain, 13390 Auriol (FR); Pico, Richard, 13090 Aix en Provence (FR)

(57) **Abrégé**

L'invention concerne notamment un système de gestion de midlets mis en oeuvre dans un réseau de radiotéléphonie mobile comprenant un terminal mobile 10 renfermant un élément sécurisé 11 géré par l'opérateur du réseau. Le terminal mobile 10 comprend un gestionnaire de midlets 12 installé de manière fixe dans le terminal mobile 10. Selon l'invention, l'élément sécurisé 11 comprend une liste de midlets 13 pouvant être installées ou exécutées par le terminal mobile 10, le gestionnaire de midlets 12 vérifiant par consultation de la liste 13 et à chaque demande d'installation ou d'exécution d'une midlet si cette midlet peut être installée ou exécutée par le terminal mobile 10.

## Description

Le domaine de l'invention est celui de la radiotéléphonie mobile et concerne plus précisément un système de gestion de midlets mis en oeuvre dans un réseau de radiotéléphonie mobile.

De manière connue, une midlet est un programme de type Java installé dans un terminal mobile, par exemple un terminal de type GSM.

On se placera dans le cadre de la description suivante dans un système où un terminal mobile comprend un élément sécurisé classique tel qu'une carte SIM ou USIM amovible permettant de s'authentifier auprès du réseau de télécommunications. Le numéro de téléphone de l'abonné du terminal mobile, appelé MSISDN dans la terminologie GSM, est mémorisé dans la carte (U)SIM. Ce numéro de téléphone permet notamment à l'opérateur du réseau de télécommunications de charger des applications dans la carte (U)SIM et de modifier les données qui y sont mémorisées.

De manière connue, une midlet peut être installé par l'opérateur du réseau de radiotéléphonie mobile auquel est rattaché le terminal, par exemple via OTA, ou alors par le détenteur du terminal. Le lancement d'une application de type midlet permet par exemple d'effectuer des paiements NFC (Near Field Communication en anglais - Communication en champ proche), de gérer l'interface graphique du terminal (présentation du nom de l'opérateur notamment) ou d'assurer la communication OTA entre le réseau de l'opérateur et l'ESE, via la carte (U)SIM. Un ESE (Embedded Secure Element en anglais - Elément sécurisé intégré en français) est une carte multi-applicative sécurisée soudée dans un terminal.

Un ESE n'a pas de capacité OTA « native » et n'est pas sous le contrôle de l'opérateur du réseau. Néanmoins, l'opérateur peut y stocker des données via OTA en s'appuyant sur les mécanismes de communication natifs au terminal mobile, mais ces mécanismes n'utilisent pas la carte (U)SIM. Il est donc possible au MNO d'installer via OTA - dans un ESE - des applications similaires à celles installées dans une (U)SIM.

Un problème fréquemment rencontré par les opérateurs de téléphonie mobile est qu'une midlet précédemment téléchargée via OTA dans l'ESE d'un terminal mobile peut être supprimée ou altérée par l'utilisateur de ce terminal. De ce fait, la fonction que devait assurer cette midlet n'est plus assurée ou est altérée. S'il s'agit par exemple d'une application de type NFC, l'utilisateur ayant supprimé la midlet afférente ne pourra plus effectuer de paiement par NFC et il s'ensuit une perte de gain pour l'opérateur. De même, si la midlet avait pour fonction d'afficher le nom ou le logo de l'opérateur, sa suppression entraîne une perte de notoriété pour l'opérateur.

Un autre problème est que l'utilisateur peut de son propre fait installer des midlets dans l'élément sécurisé ESE de son terminal mobile. L'opérateur perd alors tout contrôle des midlets installées sur le terminal de son abonné.

Il est donc souhaitable que l'opérateur puisse contrôler les midlets installés dans les terminaux mobiles d'usagers.

A cet effet, la présente invention propose de fournir un système de gestion de midlets permettant à un opérateur de radiotéléphonie mobile d'exercer un contrôle absolu sur les midlets installées dans les ESE ou dans les cartes (U)SIM des terminaux de ses abonnés.

Cet objectif, ainsi que d'autres qui apparaîtront par la suite, est atteint grâce à un système de gestion de midlets mis en oeuvre dans un réseau de radiotéléphonie mobile comprenant un terminal mobile renfermant un élément sécurisé géré par l'opérateur du réseau, le terminal mobile comprenant un gestionnaire de midlets installé de manière fixe dans le terminal mobile. Selon l'invention, l'élément sécurisé comprend une liste de midlets pouvant être installés ou exécutés par le terminal mobile, le gestionnaire de midlets vérifiant par consultation de cette liste et à chaque demande d'installation ou d'exécution d'une midlet si cette midlet peut être installée ou exécutée par le terminal mobile.

Dans un mode de mise en oeuvre, l'élément sécurisé est un élément solidaire du terminal mobile.

Dans un autre mode de mise en oeuvre, l'élément sécurisé est une carte SIM ou USIM.

Avantageusement, le gestionnaire de midlets vérifie également à chaque mise sous tension du terminal mobile si les midlets installées dans le terminal mobile ont le droit d'être exécutées, par consultation de la liste de midlets comprise dans l'élément sécurisé.

L'invention concerne également un procédé de gestion de midlets mis en oeuvre dans un réseau de radiotéléphonie mobile comprenant un terminal mobile renfermant un élément sécurisé géré par l'opérateur du réseau. Le terminal mobile comprend un gestionnaire de midlets installé de manière fixe dans le terminal mobile. Selon l'invention, le procédé consiste à vérifier les droits d'installation ou d'exécution d'une midlet, par consultation d'une liste de midlets pouvant être installées ou exécutées par le terminal mobile, cette liste étant mémorisée dans l'élément sécurisé, lors de chaque demande d'installation ou d'exécution de cette midlet.

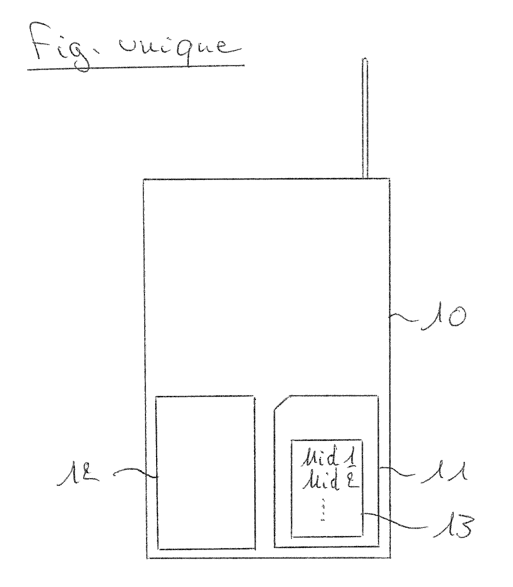

D'autres caractéristiques et avantages de l'invention apparaîtront à la lecture suivante d'un mode de mise en oeuvre avantageux de l'invention, donné à titre illustratif et non limitatif, et de la figure unique annexée représentant un mode de mise en oeuvre préférentiel du procédé selon l'invention.

Sur la figure unique annexée, un terminal mobile 10 est destiné à communiquer dans un réseau de radiotéléphonie mobile. Le terminal 10 comporte de manière classique un clavier, un écran, ainsi qu'un élément sécurisé 11 géré par l'opérateur du réseau. Cet élément sécurisé 11 est soit une carte SIM classique (dans le système GSM) ou une carte USIM (dans le système de troisième génération). L'élément sécurisé peut également être un ESE tel que décrit précédemment, c'est-à-dire un élément solidaire du terminal mobile 10.

De manière connue, le terminal mobile 10 comprend un gestionnaire de midlets 12 installé de manière fixe dans le terminal mobile 10. Il peut par exemple s'agir d'une application informatique ou alors d'un composant électronique dont la fonction est dédiée à cette gestion de midlets.

Selon l'invention, l'élément sécurisé 11 comprend une liste 13 de midlets pouvant être installées ou exécutées par le terminal mobile 10. Le gestionnaire de midlets 12 vérifie par consultation de cette liste 13 et à chaque demande d'installation ou d'exécution d'une midlet si cette midlet peut être installée ou exécutée par le terminal mobile 10.

Comme l'élément sécurisé 11 est sous contrôle total de l'opérateur du réseau, ce dernier peut autoriser ou non l'installation ou l'exécution d'une midlet, l'utilisateur du terminal 10 n'ayant aucune possibilité de modifier le contenu de la liste 13.

Ainsi, à titre d'exemple, lors d'une tentative de téléchargement (par exemple par voie OTA) d'une midlet par l'utilisateur du terminal 10, le gestionnaire de midlets va, avant d'autoriser le téléchargement, vérifier dans la liste 13 si le téléchargement de cette midlet a été autorisé par l'opérateur. L'autorisation consiste par exemple à prévoir un drapeau binaire associé au nom de la midlet, un état logique « 0 » indiquant que la midlet n'a pas le droit d'être installée, un état logique « 1 » indiquant en revanche que la midlet a le droit d'être installée. Une autre solution consiste à autoriser uniquement les téléchargements de midlets dont les noms sont présents dans la liste 13. Suite à cette vérification, le téléchargement de la midlet est ou non autorisé.

L'élément sécurisé 11 et plus précisément le contenu de la liste 13 peut être mis à jour par l'opérateur via OTA. L'opérateur peut ainsi y ajouter des midlets autorisées ou interdites, selon ses souhaits. La liste 13 est bien entendu non effaçable par l'utilisateur, seul l'opérateur ayant des droits d'écriture ou de suppression d'éléments de cette liste 13.

Dans le cas particulier où l'élément sécurisé 11 est un élément amovible tel qu'une carte (U)SIM, il est préférentiellement prévu que le gestionnaire de midlets 12 vérifie également à chaque mise sous tension du terminal mobile 10 si les midlets installées dans le terminal 10 ont le droit d'être exécutées, par consultation de la liste de midlets 13.

En cas de détection dans le terminal 10 par le gestionnaire de midlets 12 d'une midlet qui n'a pas le droit d'être exécutée (par exemple suite à une tentative d'exécution de la midlet, à la mise sous tension du terminal mobile ou à tout autre moment où une vérification est lancée), le gestionnaire de midlets 12 peut désactiver la midlet pour la rendre inopérationnelle.

L'invention concerne donc également un procédé de gestion de midlets consistant à vérifier les droits d'installation ou d'exécution d'une midlet, par consultation d'une liste de midlets pouvant être installés ou exécutés par le terminal, lors de chaque demande d'installation ou d'exécution de la midlet.

L'invention telle que décrite ci-dessus permet donc d'interdire à l'utilisateur l'effacement de certaines midlets, celles-ci étant gérées par l'opérateur. II est possible de laisser à l'utilisateur le droit de modifier certaines midlets, celles qui ne sont pas gérées par l'opérateur, par exemple une midlet afférente à un contrôle parental.

La description qui précède a été donnée à simple titre illustratif et non limitatif et l'homme du métier imaginera aisément d'autres modes de mise en oeuvre de la présente invention entrant dans le cadre des revendications.

## Revendications

1. Système de gestion de midlets mis en oeuvre dans un réseau de radiotéléphonie mobile comprenant un terminal mobile (10) renfermant un élément sécurisé (11) géré par l'opérateur dudit réseau, ledit terminal mobile (10) comprenant un gestionnaire de midlets (12) installé de manière fixe dans ledit terminal mobile (10), **caractérisé en ce que** ledit élément sécurisé (11) comprend une liste de midlets (13) pouvant être installées ou exécutées par ledit terminal mobile (10), ledit gestionnaire de midlets (12) vérifiant par consultation de ladite liste (13) et à chaque demande d'installation ou d'exécution d'une midlet si cette midlet peut être installée ou exécutée par ledit terminal mobile (10).

2. Système selon la revendication 1, **caractérisé en ce que** ledit élément sécurisé (11) est un élément solidaire dudit terminal mobile (10).

3. Système selon la revendication 1, **caractérisé en ce que** ledit élément sécurisé (11) est une carte SIM ou USIM.

4. Système selon l'une des revendications 1 à 3, **caractérisé en ce que** ledit gestionnaire de midlets (12) vérifie également à chaque mise sous tension dudit terminal mobile (10) si les midlets installées dans ledit terminal mobile (10) ont le droit d'être exécutées, par consultation de ladite liste de midlets (13) comprise dans ledit élément sécurisé (11).

5. Procédé de gestion de midlets mis en oeuvre dans un réseau de radiotéléphonie mobile comprenant un terminal mobile (10) renfermant un élément sécurisé (11) géré par l'opérateur dudit réseau, ledit terminal mobile (10) comprenant un gestionnaire de midlets (12) installé de manière fixe dans ledit terminal mobile (10), **caractérisé en ce qu**'il consiste à vérifier les droits d'installation ou d'exécution d'une midlet, par consultation d'une liste de midlets (13) pouvant être installées ou exécutées par ledit terminal mobile (10), ladite liste (13) étant mémorisée dans ledit élément sécurisé (11), lors de chaque demande d'installation ou d'exécution de ladite midlet.
